# EUROPEAN PATENT APPLICATION

(11) **EP 4 524 724 A1**
(43) Date of publication of application: **19.03.2025**
(21) Application number: 23839789.7
(22) Date of filing: 24.05.2023
(51) Int. Cl.: G06F 8/41, G06F 9/48, G06F 9/50

(54) **ELECTRONIC DEVICE AND METHOD FOR COMPILING PACKAGES ON BASIS OF ORDER OBTAINED BY INTERACTION**

(30) Priority: 15.07.2022 KR 20220087837; 09.08.2022 KR 20220099456
(71) Applicant: Samsung Electronics Co., Ltd., Suwon-si, Gyeonggi-do 16677 (KR)
(72) Inventor: JEONG, Kwanhee, Suwon-si Gyeonggi-do 16677 (KR); KIM, Hyoungjong, Suwon-si Gyeonggi-do 16677 (KR); LIM, Chanbin, Suwon-si Gyeonggi-do 16677 (KR); LEE, Sengtai, Suwon-si Gyeonggi-do 16677 (KR)
(74) Representative: Appleyard Lees IP LLP
(86) International application number: PCT/KR2023/007113
(87) International publication number: WO 2024/014695

(57) **Abstract**

An electronic device according to an embodiment may compile second type instructions stored in a package and obtain an order of a plurality of packages on the basis of execution of a first application for obtaining first type instructions. The electronic device may sequentially compile the plurality of packages on the basis of the obtained order. The electronic device may compile one or more packages from among the plurality of packages on the basis of frequencies of the plurality of packages being executed, in response to identification that at least one of a memory usage, a temperature, or a battery of the electronic device is within a designated range while sequentially compiling the plurality of packages on the basis of the execution of the first application.

## Description

### [Technical Field]

Embodiments described below relate to an electronic device and a method for compiling packages on the basis of order obtained by an interaction.

### [Background Art]

An electronic device may include a processor that processes an instruction (e.g., an instruction indicated by a machine language and/or a native code) indicated by a digital signal. In order to control the processor, compiling a source code inputted from a user into a native code may be required. Compilation may be a conversion of the source code or a byte code into the native code.

### [Disclosure]

### [Technical Solution]

An electronic device according to an embodiment may include a processor to drive instructions in a first type. The electronic device may include memory in which a plurality of packages including instructions in a second type different from the first type are stored. The processor may obtain, by compiling the instructions in the second type stored in a package, an order of the plurality of packages based on execution of the first application to obtain the instructions in the first type. The processor may sequentially compile the plurality of packages based on the obtained order. The processor may, in a state of sequential compiling of the plurality of packages based on execution of the first application, compile, in response to identifying that at least one of a usage of the memory, a temperature, or a battery of the electronic device is included in a preset range, one or more packages among the plurality of packages based on frequency, at which the plurality of packages were executed.

A method of an electronic device according to an embodiment may include executing a first application to obtain instructions in a first type. The method of the electronic device may include, based on execution of the first application, obtaining an order of a plurality of packages to compile instructions in a second type which are stored in a package. The method of the electronic device may include sequentially compiling the plurality of packages based on the obtained order. The method of the electronic device may include, in a state of sequential compiling of the plurality of packages based on execution of the first application, compiling, in response to identifying that at least one of a usage of the memory, a temperature, or a battery of the electronic device is included in a preset range, one or more packages among the plurality of packages based on a frequency at which the plurality of packages were executed.

According to an embodiment, a computer readable-storage medium storing one or more programs may store one or more programs, and the one or more programs may cause, when executed by a processor of an electronic device, based on execution of a first application to obtain instructions in a first type, to obtain an order of a plurality of packages to compile instructions in a second type stored in a package. The one or more programs may cause to sequentially compile the plurality of packages based on the obtained order. The one or more programs may cause the processor of the electronic device to, in a state of sequential compiling of the plurality of packages based on execution of the first application, compile, in response to identifying that at least one of a usage of the memory, a temperature, or a battery of the electronic device is included in a preset range, one or more packages among the plurality of packages, based on frequency at which the plurality of packages were executed.

### [Description of the Drawings]

FIG. 1 is a block diagram of an electronic device in a network environment according to an embodiment.
FIG. 2 illustrates an example of a block diagram of an electronic device according to an embodiment.
FIG. 3 illustrates an example of an operation in which an electronic device according to an embodiment executes a first application based on a scheduler.
FIG. 4 illustrates an example of an operation in which an electronic device according to an embodiment, from a list of a plurality of packages, obtains an order for compiling the plurality of packages.
FIG. 5 illustrates an example of an operation in which an electronic device according to an embodiment adjusts an order for compiling a plurality of packages based on a state of the electronic device.
FIG. 6 illustrates an example of an operation in which an electronic device according to an embodiment, based on profile information of a package, optimizes the package.
FIG. 7 illustrates, based on an input representing that an electronic device according to an embodiment selects an application, an example of an operation of executing the application.
FIG. 8 illustrates an example of a flowchart for describing an operation of an electronic device according to an embodiment.

### [Mode for Invention]

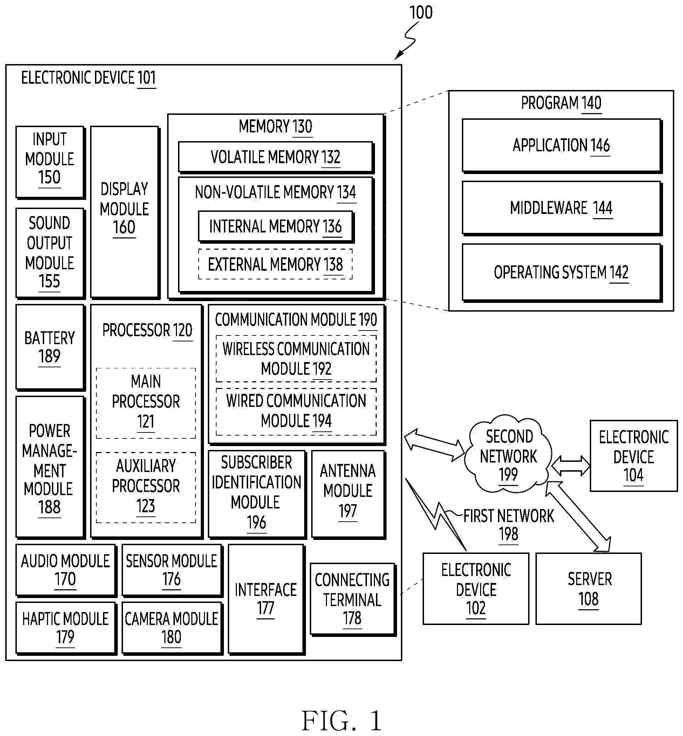

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

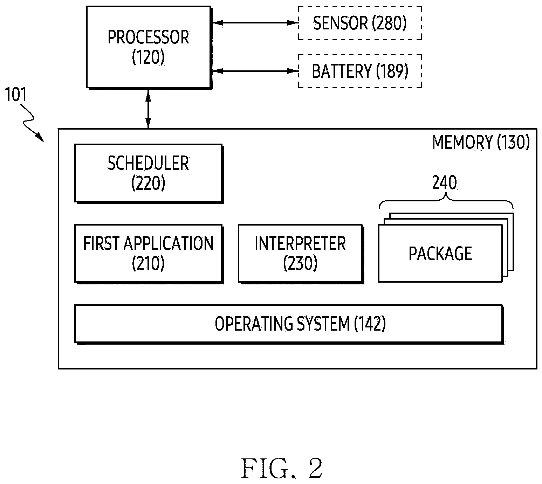

FIG. 2 illustrates an example of a block diagram of an electronic device according to an embodiment. An electronic device 101 of FIG. 2 may be an example of the electronic device 101 of FIG. 1. A processor 120 of FIG. 2 may be an example of the processor 120 of FIG. 1. Memory 130 of FIG. 2 may be an example of the memory 130 of FIG. 1. An operating system 142 of FIG. 2 may be an example of the operating system 142 of FIG. 1. A battery 189 of FIG. 2 may be an example of the battery 189 of FIG. 1. A first application 210 of FIG. 2 may be an example of the middleware 144 of FIG. 1. A scheduler 220 of FIG. 2 may be included in the middleware 144 and/or the operating system 142 of FIG. 1. An interpreter 230 of FIG. 2 may be included in the middleware 144 and/or the operating system 142 of FIG. 1. A plurality of packages 240 of FIG. 2 may be an example of the application 146 of FIG. 1. A sensor 280 of FIG. 2 may be an example of the sensor module 176 of FIG. 1.

Referring to FIG. 2, the electronic device 101 according to an embodiment may include at least one of the processor 120, the memory 130, the battery 189, or the sensor 280. The processor 120, the memory 130, the battery 189, and the sensor 280 may be electronically and/or operably coupled with each other by an electronical component such as a communication bus. Although illustrated based on different blocks, an embodiment is not limited thereto. For example, a portion (e.g., at least a portion of the processor 120, the memory 130, the battery 189, and/or the sensor 280) of hardware component illustrated in FIG. 2 may be included in a single integrated circuit such as a system on a chip (SoC). A type and/or the number of hardware component included in the electronic device 101 are not limited to those illustrated in FIG. 2. For example, the electronic device 101 may include only a portion of the hardware component illustrated in FIG. 2. According to an embodiment, the electronic device 101 may omit the battery 189 and/or the sensor 280. The processor 120, the memory 130, the battery 189, and/or the sensor 280 are illustrated in a single number, but may be plural.

The processor 120 of the electronic device 101 according to an embodiment may correspond to at least a portion of the processor 120 of FIG. 1. The processor 120 according to an embodiment may include the hardware component for processing data based on one or more instructions. For example, the hardware component for processing the data may include an arithmetic and logic unit (ALU), a floating point unit (FPU), a field programmable gate array (FPGA), an application processor (AP), a micro-computer (and/or micro-controller (Micom)), and/or a central processing unit (CPU). The number of processors 120 may be one or more. For example, the processor 120 may have a structure of a multi-core processor such as a dual core, a quad core, or a hexa core. For example, the processor 120 may have a single core processor structure referred as a single core. However, it is not limited thereto.

The electronic device 101 according to an embodiment may include the memory 130. The memory 130 may correspond to the memory 130 of FIG. 1. For example, the memory 130 may store instructions that cause an operation of the electronic device 101. For example, the processor 120 may cause the operation of the electronic device 101 when executing the instructions stored in the memory 130.

According to an embodiment, the memory 130 may include at least one of the operating system 142, the first application 210, the scheduler 220, the interpreter 230, the plurality of packages 240, or a combination thereof. For example, the operating system 142 may include a mobile operating system. For example, the operating system 142 may be stored and executed in at least one of a smartphone, a tablet computer, a personal digital assistant (PDA), or a combination thereof. However, it is not limited thereto.

The processor 120 according to an embodiment may drive instructions in a first type. For example, the instructions in the first type may include a native code. For example, the instructions in the first type may be at least a portion of a machine language and/or an assembly language, which is included in a binary file stored in the memory 130 and encoded in a binary format. For example, the instructions in the first type may include instructions generated by compiling instructions in a second type.

For example, the instructions in the second type may be configured with a source code and/or a byte code. For example, the source code may include a C language, a JAVA language, and/or a basic (beginner's all-purpose symbolic instruction code). However, it is not limited thereto. For example, the instructions in the second type may refer to the instructions readable by the interpreter 230, and/or a virtual machine (e.g., a java virtual machine (JVM)) which is software executed by the processor 120, such as the byte code. The byte code may be an instruction having a preset length (e.g., 1 byte). Hereinafter, a package may mean a group of one or more files (or a single file in which the one or more files are compressed) that is a set of the instructions in the second type and stored in the memory 130 for execution of an application.

According to an embodiment, the first application 210 may include an application for compiling the plurality of packages 240 including the instructions in the second type different from the first type. For example, compiling may include converting the instructions in the second type into the instructions in the first type. For example, the instructions in the first type may include packages configured with the native code. For example, the instructions in the second type may include packages configured with the byte code. For example, the first application 210 may compile the plurality of packages 240 including the instructions in the second type and convert them into sets of the instructions in the first type.

According to an embodiment, the first application 210 may compile a method included in at least a portion of the plurality of packages 240. For example, as a sub-set of the instructions included in one package, the method may be a unit that distinguishes one or more instructions for executing a specific function provided by an application corresponding to the package, such as a function, routine, and/or sub-routine. For example, the first application 210 may compile a class included in at least the portion of the plurality of packages 240. For example, as a sub-set of the instructions included in one package, the class, in order to implement an application function in units of one object, may include a data structure representing a state of the object and one or more methods representing a behavior of the object.

According to an embodiment, the processor 120 may convert and store the instructions in the second type included in the package into the instructions in the first type at a time point when the package such as the plurality of packages 240 is installed. For example, at the time point of installing the plurality of packages 240, converting and storing the instructions in the second type into the instructions in the first type may be referred to as ahead of time (AOT) method.

According to an embodiment, the processor 120 may obtain the instructions in the first type corresponding to the instructions in the second type by compiling the instructions in the second type based on the execution of the interpreter 230 in response to an input representing the execution of the application corresponding to the package (e.g., the plurality of packages 240) including the instructions in the second type. For example, the processor 120 may obtain the native code corresponding to the instructions in the second type while executing the instructions in the second type based on the execution of the interpreter 230. The processor 120 may provide a function associated with the application to a user by executing the native code obtained by the interpreter 230. For example, that the processor 120 obtains and executes the native code from the package including the instructions in the second type in response to the input may be referred to as a just in time (JIT) method.

Installing the package (e.g., the plurality of packages 240) by the processor 120 according to an embodiment may include storing the set of the instructions in the second type such as the byte code in the memory 130. The processor 120 may compile the plurality of packages 240 based on the execution of the first application 210 when a preset condition is satisfied in a state in which the plurality of packages 240 stores the set of the instructions in the second type such as the byte code. For example, the preset condition may be associated with execution frequency of the plurality of packages 240. For example, the execution frequency may include the number at which the plurality of packages 240 were executed during a preset period. For example, the execution frequency may include the time when the plurality of packages 240 were executed during the preset period. The processor 120 may compile based on the first application 210. For example, the scheduler 220 may be an example of a framework. For example, the framework may correspond to at least a portion of an Android operating system.

According to an embodiment, the processor 120 may store a package whose optimization has been completed as a file in a preset format. For example, optimization may include compiling the instructions in the second type into the instructions in the first type. Performing the optimization may include an AOT background service (e.g., a background dex opt service). Execution of the AOT background service may be controlled by the scheduler 220. The AOT background service may correspond to the first application 210.

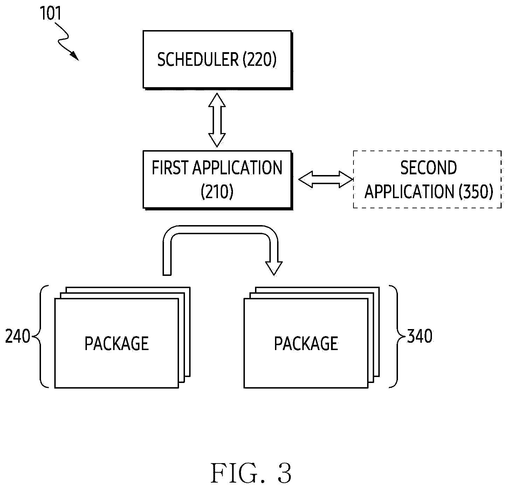

According to an embodiment, the scheduler 220 may compile at least the portion of the instructions in the second type into the instructions in the first type in a preset state. For example, the preset state may include an idle state. For example, the idle state may include a state in which an interaction of the electronic device 101 and the user does not occur for more than a preset period (e.g., 30 minutes). For example, the preset state may include a state in which the battery 189 of the electronic device 101 is being charged by an external object and a display is turned off. For example, the preset state may include a state in which the electronic device 101 displays a screen associated with the idle state in the display based on the execution of an always-on-display (AOD) function. The processor 120 may execute the first application 210 based on information causing the execution of the first application 210. An operation in which the electronic device 101 controls the execution of the first application 210 based on the scheduler 220 will be described with reference to FIG. 3.

The processor 120 of the electronic device 101 according to an embodiment may perform compiling of converting the plurality of packages 240 configured with the instructions in the second type into the instructions in the first type based on the first application 210. For example, the processor 120 may store the plurality of packages 240 converted into the instructions in the first type as a file of the preset format. The file of the preset format may include the portion in which at least the portion of the plurality of packages 240 are compiled into the instructions in the first type. For example, the file of the preset format may have a filename extension of '.oat', '.art', and/or '.odex'. In the example, when executing the plurality of packages 240, the processor 120 may execute the plurality of packages 240 based on the compiled portion. For example, the processor 120 may directly access the native code included in the compiled portion by bypassing the interpreter 230. Since the processor 120 directly accesses the native code, the execution of the application based on the compiled portion may be performed faster than the execution of the instructions in the second type based on the interpreter 230. For example, compiling in the preset state may include a hybrid method (e.g., a mixture of the AOT method and JIT method).

According to an embodiment, the processor 120 may compile the instructions in the second type stored in at least a package of the plurality of packages 240. The processor 120 may execute the first application 210 for obtaining the instructions in the first type. The processor 120 may obtain an order of the plurality of packages 240 based on the execution of the first application 210. The processor 120 may obtain the order of the plurality of packages 240 based on the execution of the first application 210 for obtaining the instructions in the first type by compiling the instructions in the second type stored in the package.

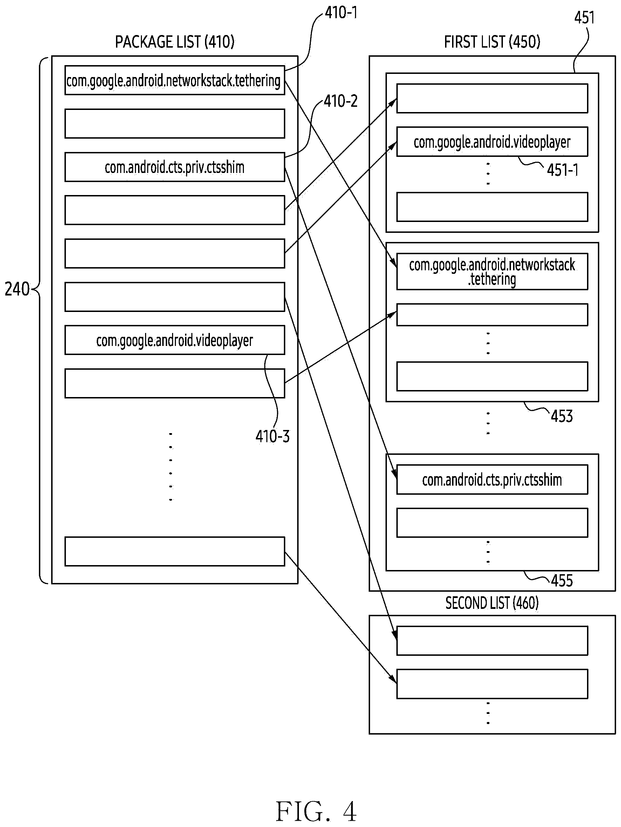

For example, the order of the plurality of packages 240 may be obtained based on interaction between the electronic device 101 and the user. The interaction may include a history in which the electronic device 101 executed an application corresponding to at least one of the plurality of packages 240 based on a user input. For example, the processor 120 may assign the order of packages used within 10 days by the user of the electronic device 101 as a first priority. For example, the processor 120 may assign the order of packages used within 30 days by the user of the electronic device 101 as a second priority which is a priority after the first priority. For example, the processor 120 may assign packages with an icon shown by a launcher application among the plurality of packages 240 as a third priority which is a priority after the second priority. For example, the processor 120 may assign packages not assigned to the first priority to the third priority as a fourth priority which is a priority after the third priority. However, it is not limited thereto. An operation in which the electronic device 101 obtains the order of the plurality of packages 240 will be described with reference to FIGS. 4 to 5.

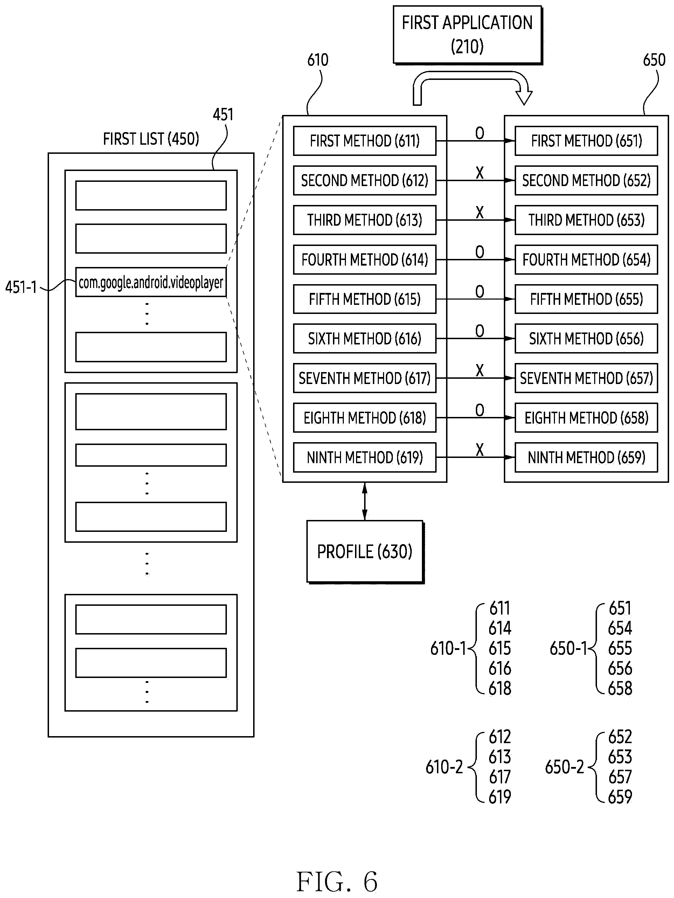

According to an embodiment, the processor 120 may sequentially compile the plurality of packages 240 based on the obtained order. Compiling the plurality of packages 240 may include converting the plurality of packages 240 stored as the instructions in the second type into the instructions in the first type. An operation in which the electronic device 101 compiles any one of the plurality of packages 240 will be described with reference to FIG. 6.

The processor 120 according to an embodiment may obtain the order based on frequency at which the plurality of packages 240 were executed. For example, the processor 120 may obtain the order based on at least one of time at which the plurality of packages 240 were executed or the number at which the plurality of packages 240 were executed. For example, the processor 120 may obtain the order based on the time at which the plurality of packages 240 were executed in the preset period. For example, in the order, one package that were executed for a relatively long time among the plurality of packages 240 may have a higher priority than another package. That a specific package has a high priority may represent that the compilation of the specific package by the first application 210 is performed prior to the compilation of the other package. For example, the processor 120 may obtain the order based on the time at which the plurality of packages 240 executed in the preset period were executed. For example, the processor 120 may assign a higher priority order as the number at which the plurality of packages 240 were executed in the preset period increases. For example, the processor 120 may sequentially compile the plurality of packages 240 based on the obtained order.

As described above, the electronic device 101 according to an embodiment may preferentially compile and/or optimize high priority packages by sequentially compiling the plurality of packages 240 in the order obtained based on the frequency at which the plurality of packages 240 were executed through the execution of the first application 210. The electronic device 101 may enhance a user experience of the user of the electronic device 101 by preferentially optimizing the high priority packages.

FIG. 3 illustrates an example of an operation in which an electronic device according to an embodiment executes a first application based on a scheduler. An electronic device 101 of FIG. 3 may be an example of the electronic device 101 of FIGS. 1 to 2. A first application 210 of FIG. 3 may be an example of the first application 210 of FIG. 2. A scheduler 220 of FIG. 3 may be an example of the scheduler 220 of FIG. 2. A plurality of packages 240 of FIG. 3 may be an example of the plurality of packages 240 of FIG. 2.

Referring to FIG. 3, the processor 120 may obtain compiled packages 340 by compiling the plurality of packages 240 based on the first application 210. For example, the plurality of packages 240 may include instructions in a second type such as a byte code. For example, the compiled packages 340 may include instructions in a first type, such as native code. The packages 340 obtained based on the first application 210 may include a package in which at least a portion of the plurality of packages 240 is compiled.

The processor 120 according to an embodiment may execute the first application 210 based on the scheduler 220. The processor 120 may identify whether a preset condition for executing the first application 210 is satisfied based on the scheduler 220. Based on identifying that the preset condition is satisfied, the processor 120 may execute the first application 210. For example, the preset condition may be set based on a state of the electronic device 101. For example, the preset condition may include a state in which a battery 189 of the electronic device 101 is being charged. For example, the preset condition may include that an idle state of the electronic device 101 is maintained for a preset time (e.g., 30 minutes) or longer. For example, the idle state may include a state in which an interaction of the electronic device 101 and a user does not occur for more than the preset time interval. For example, the preset condition may include a state in which the battery 189 of the electronic device 101 is being charged by an external object such as a travel adapter (TA) and/or a wireless charging pad, and a display is turned off. For example, the preset condition may include maintaining a state in which the electronic device 101 displays a screen associated with the idle state in the display for more than the preset time interval based on execution of an always-on-display (AOD) function. For example, the preset condition may include a case where the display is turned off and a state of charge (SOC) of the battery is a preset value. For example, the preset condition may include a case where the display is turned off and a voltage of the battery is a preset voltage. For example, the preset value of the SOC of the battery may include a case of 100 %. For example, the preset voltage of the battery may include a voltage corresponding to the case where the SOC is 100 %.

The processor 120 according to an embodiment may execute the first application 210 at a preset cycle (e.g., 24 hours). For example, the processor 120 may obtain the preset cycle based on the scheduler 220. For example, the processor 120 may compile the plurality of packages 240 by executing the first application 210 once based on the preset cycle. For example, the processor 120 may execute the first application 210 at a preset time (e.g., 3 a.m.). For example, the preset time may be set by the user. For example, the processor 120 may execute the first application 210 at the preset time set by the user. The processor 120 may obtain the order associated with the plurality of packages 240 in response to the execution of the first application 210. The processor 120 may compile the plurality of packages 240 based on the order associated with the plurality of packages 240.

As an operating system 142 of the electronic device 101 is updated (e.g., over the air (OTA) update), a file structure (e.g., Android Pony Express (APEX) file) of a package may be changed. According to an embodiment, the electronic device 101 may initiate optimization (or compilation) of the plurality of packages 240 based on the first application 210 in response to identifying that the file structure is updated. The file structure is the structure of one or more files compressed in the package, and may be changed at least based on an update of the operating system 142 installed in the electronic device 101. The one or more files compressed in the package may include data required for the execution of an application corresponding to the package. For example, the one or more files may include at least one of one or more resources (e.g., icon, image, and/or video), a design element (e.g., an xml file to define activity), and/or metadata (e.g., an xml file with a preset name such as manifest) required for driving the application.

According to an embodiment, the electronic device 101 may compile at least one or more packages among the plurality of packages 240 selected by the user based on the first application 210. For example, based on the execution of the first application 210, the at least one or more packages among the plurality of packages 240 selected by the user may be compiled preferentially.

The processor 120 according to an embodiment may execute the first application 210 based on maintaining the preset condition. For example, the processor 120 may execute an onStartJob method of the first application 210 in response to identifying that the preset condition is maintained based on the execution of the scheduler 220. For example, the processor 120 may compile (or optimize) the plurality of packages 240 based on the execution of the onStartJob method of the first application 210. According to an embodiment, the processor 120 may identify that optimizing the plurality of packages 240 is aborted. For example, the processor 120 may execute the onStopJob method included in the first application 210 based on the preset condition being released. According to an embodiment, the processor 120 may execute a JobFinished method of the first application 210 based on completing optimization of the plurality of packages 240. The processor 120 may transmit information that the optimization of the plurality of packages 240 is completed to the scheduler 220 based on executing the JobFinished method. For example, the processor 120 may transmit information that the optimization of the plurality of packages 240 is aborted to the scheduler 220 based on identifying the abort.

The processor 120 according to an embodiment may abort compiling the plurality of packages 240 based on the first application 210 being in a preset state. The abort of the compilation based on the first application 210 may be performed based on the execution of the scheduler 220 by the processor 120. For example, the preset state may be associated with the state of the electronic device 101. For example, the preset state may include a case where a usage of memory 130 of the electronic device 101 exceeds a preset threshold (e.g., 95 %). For example, the preset state may include a case where a temperature of the electronic device 101 is identified as being greater than or equal to a preset threshold (e.g., 37 °C). For example, the preset state may include a case where a parameter (e.g., throttling severity) representing overload of the processor 120 and/or the battery of the electronic device 101 exceeds the threshold. The parameter representing the overload may be dependent on a predetermined temperature range and/or temperature threshold to prevent damage to the processor 120. The parameter representing the overload may be dependent on a predetermined threshold of voltage, current, and/or temperature of the battery to prevent damage to the battery due to over discharge and/or overheating of the battery. For example, the threshold may include a case where the value for the parameter is greater than or equal to THERMAL_STATUS_MODERATE. For example, the processor 120 may abort optimizing the plurality of packages 240 based on the first application 210 being running for a preset time (e.g., 10 minutes). The processor 120 may abort the execution of the first application 210 based on the execution of the first application 210 being executed in excess of the preset time.

The processor 120 according to an embodiment may receive information causing the execution of the first application 210 again from the scheduler 220 based on the abort of the execution of the first application 210. The information causing the execution of the first application 210 again from the scheduler 220 may be used to adjust the time to re-execute the first application 210 in a linear and/or exponential manner. For example, the processor 120 may adjust the time point at which the first application 210 is re-executed based on an index manner to the time point after 10 x 2^n seconds from the time point at which the execution of the first application 210 is aborted. The "n" may mean the number at which the first application 210 was executed. However, it is not limited thereto.

The electronic device 101 may compile the plurality of packages 240 based on the state of the electronic device 101, the number of packages stored in the memory 130, a size of a profile of each of the plurality of packages 240, and/or the number of files with a file name extension of '.dex' of the package. For example, in the case that the number of methods included in the package exceeds the preset threshold, the electronic device 101 may compile based on the plurality of files (e.g., the plurality of files with the file name extension of '.dex'). For example, in the case of exceeding the maximum value (e.g., 65536) of the number of methods that may be compiled or called based on a single file, the electronic device 101 may compile the methods included in the package using the plurality of files.

According to an embodiment, the processor 120 may compile the plurality of packages 240 through an order obtained based on a second application 350. For example, the second application 350 may include a launcher application. For example, the launcher application may include applications displayed on the screen when the electronic device 101 is driven. For example, the processor 120 may identify the packages displayed on the screen of the electronic device 101 through the second application 350. An operation of obtaining the order based on the second application 350 will be described with reference to FIG. 4.

According to an embodiment, the processor 120 may obtain the order in which the first application 210 compiles the plurality of packages 240 based on transmitting a preset instruction to the scheduler 220. For example, the processor 120 may initiate compiling the plurality of packages 240 based on the first application 210 by executing at least one shell command of 'adb shell cmd package compile -m speed-profile -f -a' or 'adb shell cmd package bg-dexopt-job' based on the execution of the scheduler 220. While the plurality of packages 240 are compiled, the first application 210 may store a result of compiling each of the plurality of packages 240 in log information.

As described above, the electronic device 101 according to an embodiment may enhance a user experience by compiling the plurality of packages 240 based on the obtained order. For example, the electronic device 101 may assign a high priority to packages frequently used by the user, in the order. The electronic device 101 may increase speed at which the packages used by the user are executed, by preferentially compiling packages frequently used by the user.

FIG. 4 illustrates an example of an operation in which an electronic device according to an embodiment, from a list of a plurality of packages, obtains an order for compiling the plurality of packages. An electronic device 101 of FIG. 4 may be an example of the electronic device 101 of FIGS. 1 to 3. Obtaining the order described with reference to FIG. 4, may be modified based on the electronic device 101 according to an embodiment executing the first application 210 of FIG. 2.

Referring to FIG. 4, according to an embodiment, a processor (e.g., the processor 120 of FIG. 2) (hereinafter, the processor 120) may identify a package list 410. For example, the processor 120 may obtain the package list 410 in response to a shell command such as 'adb shell pm list packages' generated based on execution of the first application 210 of FIG. 2. For example, the package list 410 may be formed based on a name (e.g., a package name) assigned to each of a plurality of packages (e.g., the plurality of packages 240 of FIG. 2) (hereinafter, the plurality of packages 240). For example, the processor 120 may identify the package list 410 based on a hash code of each of the package names obtained by applying a hashing function to package names assigned to each of the plurality of packages 240. For example, in the package list 410, the package names may be arranged by ascending order or descending order of the hash codes. The package list 410 may be stored in memory (e.g., the memory 130 of FIG. 2) of the electronic device 101 based on a data structure such as an array map.

Referring to FIG. 4, a first package 410-1, a second package 410-2, or a third package 410-3 included in the package list 410 is exemplarily illustrated. Each of the first package 410-1, the second package 410-2, and the third package 410-3 may correspond to different applications installed in the electronic device 101. For example, the first package 410-1 to the third package 410-3 included in the package list 410 may be configured with instructions in a second type. For example, the instructions in the second type may include a byte code. For example, the first package 410-1, which is an application (e.g., a system service) executed for tethering of the electronic device 101, may have the package name of'com.google.android.networkstack.tethering'. For example, the second package 410-2, which is an application for identifying compatibility between the electronic device 101 and an operating system (e.g., the operating system 142 of FIG. 2), may have the package name of 'com.android.cts.priv.ctsshim'. For example, the third package 410-3, which is an application for playing a media content such as a video, may have the package name of 'com.google.android.videoplayer'.

The processor 120 according to an embodiment may obtain a first list 450 from the package list 410 based on the execution of the first application 210. For example, the processor 120 may sequentially compile packages in the first list 450 based on an order included in the first list 450 converted in response to the execution of the first application (e.g., the first application of FIG. 2) (hereinafter, the first application 210).

The processor 120 according to an embodiment may obtain the first list 450 from the package list 410. The processor 120 may classify the packages identified by the package list 410 into different groups. In a state in which the packages are classified into any one of the groups, the processor 120 may obtain an order for sequentially compiling the packages based on an order between the groups and an order between the packages included in each of the groups. The first list 450 may represent the order obtained by the processor 120.

Referring to FIG. 4, the processor 120 according to an embodiment may obtain the first list 450 based on a sequential connection of a first group 451, a second group 453, and a third group 455. The sequential connection of the first group 451, the second group 453, and the third group 455 in the first list 450 may represent that compilation of packages based on the first application 210 starts with the package included in the first group 451 among the groups. For example, the processor 120 may compile the plurality of packages 240 based on an order represented by the first list 450 in response to the execution of the first application 210. For example, the processor 120 may compile the packages classified into the second group 453 based on compiling the packages classified into the first group 451. For example, the processor 120 may compile the packages classified into the third group 455 based on compiling the packages classified into the second group 453. However, it is not limited thereto.

For example, the first group 451 may include at least one package executed by the electronic device 101 in a preset time (e.g., 48 hours). For example, when the plurality of packages are executed, the processor 120 may store an executed history of each of the plurality of packages based on an application programming interface (API) such as 'notifyPackageUse'. For example, the executed history of each of the plurality of packages may be stored based on a timestamp format. For example, the processor 120 may store the timestamp in a partition in which the user may not access in the memory 130.

For example, the packages classified into the first group 451 may include at least one package executed in the preset time. For example, the order in the packages classified into the first group 451 may be obtained based on the number executed in the preset time. For example, the processor 120 may identify the package that has been relatively frequently executed in the preset time in the packages classified into the first group 451 as a high priority, and compile it preferentially. For example, among the packages classified into the first group 451, one package 451-1 may be the package in which the number used by the user of the electronic device 101 is the second most executed in the preset time.

According to an embodiment, the processor 120 may compile one or more packages of the plurality of packages 240 based on the groups 451, 453, and 455 of the first list 450. For example, the first group 451 may be obtained based on the first list 450. For example, the processor 120 may compile the plurality of packages 240 in the order included in the first list 450. For example, the first group 451 may be obtained based on frequency at which the plurality of packages 240 were executed. For example, the frequency at which the plurality of packages 240 were executed may include the number at which the plurality of packages 240 were executed during the preset period. For example, the frequency at which the plurality of packages 240 were executed may include the time at which the plurality of packages 240 were executed during the preset period (e.g., 7 days). The processor 120 may compile the plurality of packages 240 through the first application 210 based on the frequency at which the plurality of packages 240 stored in the memory 130 were executed.

According to an embodiment, the processor 120 may obtain the packages classified into the second group 453 based on a second application (e.g., the second application 350 of FIG. 3) (hereinafter, the second application 350) different from the first application 210. For example, the packages classified into the second group 453 may include the packages displayed on a screen (e.g., a home screen) of the electronic device 101 by the second application 350 among the packages excluding at least one package preferentially classified into the first group 451 among the package list 410. For example, the packages displayed on the screen of the electronic device 101 may represent that they are displayed on the screen of the second application 350 based on an intent filter. According to an embodiment, the electronic device 101 may obtain the packages in the second group 453 by searching for a tag for registering an icon in the screen displayed by the second application 350 in metadata (e.g., androidmanifest.xml) included in each of the packages. Table 1 may represent the intent filter that is an example of the tag. Searching for the tag by the electronic device 101 based on the execution of the first application 210 may be performed by a call of a preset API such as 'queryIntent Activities'.

**[Table 1]**

| |
|---|
| ```
<intent-filter>
              <action android:name="android.intent.action.MAIN" />
              <category android:name="android.intent.category.LAUNCHER" />
 </intent-filter>
 
``` |

For example, based on the tag such as Table 1, the packages may be displayed on the screen of the electronic device 101 by the second application 350. The processor 120 may identify the packages displayed on the screen by the second application 350. The processor 120 may assign a package displayed on the screen by the second application 350 and executed in a first time interval (e.g., a time interval between a current time point and a time point seven days before the current time point) to the first group 451. The processor 120 may preferentially compile the packages classified into the first group 451 over the packages classified into the second group 453 and the third group 455. The processor 120 may assign the packages displayed on the screen by the second application 350 to the second group 453. The processor 120 may assign a package that is displayed on the screen by the second application 350 and executed between a second time interval (e.g., a time interval between a time point seven days prior to the current time point and a time point 20 days before the current time point) that does not overlap the first time interval to the second group 453. The processor 120 may compile the packages classified into the second group 453 based on completing compilation of the packages classified into the first group 451.

According to an embodiment, the processor 120 may classify the package including the icon into the second group 453 based on the icon of the plurality of packages 240 being identified. For example, the package including the icon may include the tag such as Table 2 in the package.

**[Table 2]**

| |
|---|
| ```
<app-icon>
              <path in a package /icon.png>
 </app-icon>
``` |

Based on the tag such as Table 2, the processor 120 may display the icon of the packages on the screen. The processor 120 may identify that the package includes the icon based on the tag of Table 2. The processor 120 may classify the package including the icon into the second group 453 based on identifying that the package includes the icon. For example, the processor 120 may classify the packages executed between the second time interval, including the icon, into the second group 453. The processor 120 may compile the packages classified into the second group 453 based on completing compilation of packages classified into the first group 451. According to an embodiment, the processor 120 may classify the packages not classified into the first group 451 and the second group 453 into the third group 455. For example, the packages classified into the third group 455 may include at least one package that is not in a hibernation state, among the packages in the package list 410 excluding at least one package that is preferentially classified into the first group 451 and the second group 453. For example, a package in the hibernation state may include a package that has not been used for a third time interval prior to a threshold time point (e.g., 90 days before the current time point). The processor 120 may compile the packages classified into the third group 455 based on compiling the packages classified into the second group 453. According to an embodiment, the processor 120 may generate a file of an extension (e.g., a file name extension of '.odex') of a preset format based on completing the compilation based on the groups 451, 453, and 455 by the first application 210.

For example, the packages corresponding to applications executed in the first time interval (e.g., the time interval between today and a date 7 days prior to today) may be classified into the first group 451. The packages corresponding to applications executed in the second time interval (e.g., the time interval between a date 7 days prior to today) that do not overlap the first time interval, and registered on the home screen may be classified into the second group 453. The packages corresponding to the applications in the hibernation state are packages corresponding to applications that were not executed in the third time interval prior to the threshold time point (e.g., a date 90 days prior to today) and may be classified into a second list 460. The packages corresponding to applications not classified into the first group 451, the second group 453, and the second list 460 may be classified into the third group 455.

As described above, the electronic device 101 according to an embodiment may enhance a user experience of the electronic device 101 by compiling the plurality of packages 240 based on the groups 451, 453, and 455. For example, the electronic device 101 may enhance the user experience by providing a faster execution speed of compiled packages, by preferentially compiling the packages in which a user interaction has occurred.

According to an embodiment, the processor 120 may not compile the packages that do not include the byte code and/or the packages in the hibernation state. For example, the package that does not include the byte code may be a resource-only package. For example, the package in the hibernation state may include a package that was not used for a preset period. For example, the processor 120 may store the packages that do not include the byte code and/or the packages in the hibernation state in the second list 460. For example, the processor 120 may generate the second list 460 based on the plurality of packages 240 not being executed during the preset period. The processor 120 may exclude the packages included in the second list 460 from the groups 451, 453, and 455 included in the first list 450.

As described above, the electronic device 101 according to an embodiment may efficiently use the memory 130 by not compiling the packages included in the second list 460. The electronic device 101 may reduce a usage of the memory 130 by not compiling the packages in which the user interaction has not occurred.

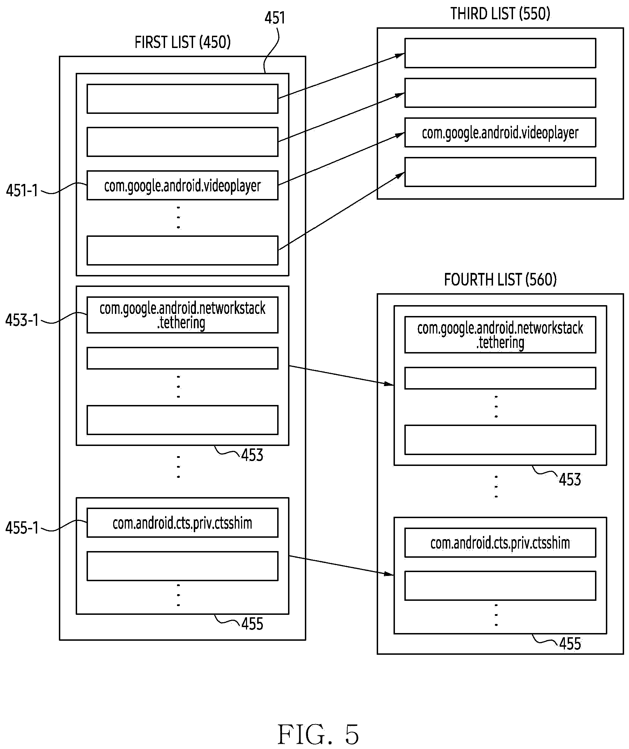

FIG. 5 illustrates an example of an operation in which an electronic device according to an embodiment adjusts an order for compiling a plurality of packages based on a state of the electronic device.

Referring to FIG. 5, a processor 120 according to an embodiment may compile a plurality of packages (e.g., the plurality of packages 240 of FIG. 2) (hereinafter, the plurality of packages 240) based on a first list 450 in response to execution of a first application (e.g., the first application 210 of FIG. 2) (hereinafter, the first application 210). For example, the processor 120 may compile packages included in the first list 450 based on groups 451, 453, and 455. For example, while compiling the plurality of packages 240 based on the first application (e.g., the first application 210 of FIG. 2) (hereinafter, the first application 210), the processor 120 may abort compiling by occurrence of an event. For example, after compiling a package 451-1 included in a first group 451 is completed, the processor 120 may abort compiling the packages included in the first list 450 based on the occurrence of the event. For example, the event may be associated with memory (e.g., the memory 130 of FIG. 2) (hereinafter, the memory 130) of the electronic device 101, a temperature of the electronic device 101, and/or a state of charge (SOC) of a battery (e.g., the battery 189 of FIG. 2) (hereinafter, the battery 189).

According to an embodiment, the processor 120 may compile the packages executed in a first time interval and displayed on a screen by a second application (e.g., the second application 350 of FIG. 2) in a limit state (e.g., in a case that the usage of the memory 130 is 90 % or more and 95 % or less, and/or the temperature of the electronic device 101 is 35 °C or more and 37 °C or less).

According to an embodiment, the processor 120 may store the plurality of packages of which compilation has been completed in the memory 130 based on completion of a compilation of at least one of the plurality of packages included in the first list 450. For example, the processor 120 may store the plurality of packages of which compilation has been completed in a third list 550. For example, the third list 550 may include packages of which compilation has been completed based on the first application 210. For example, the packages included in the third list 550 may not be compiled by the processor 120 while the first application 210 is being executed.

The processor 120 according to an embodiment may not compile the packages included in the third list 550 while executing the first application 210 in the limit state. For example, the processor 120 may initialize the third list 550 every preset period (e.g., 7 days). For example, initialization may include storing the packages compiled in the first list 450 in the third list 550.

The processor 120 according to an embodiment may generate a fourth list 560 based on generating the third list 550. For example, the fourth list 560 may be one that excludes the plurality of packages included in the third list 550 in the first list 450. For example, the processor 120 may compile the plurality of packages included in the fourth list 560 based on the fourth list 560 and/or the third list 550 in response to the execution of the first application 210.

For example, the processor 120 may assign, to the plurality of packages included in the third list 550, an order after an order of the plurality of packages included in the fourth list 560. For example, the processor 120 may compile the plurality of packages included in the fourth list 560 in preference to the packages included in the third list 550. The processor 120 may compile the plurality of packages included in the third list 550 based on that the compiling of the plurality of packages included in the fourth list has been completed. However, it is not limited thereto.

As described above, the electronic device 101 according to an embodiment may prevent the plurality of packages of the first list 450 from being compiled in duplicate by assigning the order of the plurality of packages included in the third list 550 to an order after the order of the plurality of packages included in the fourth list 560.

The processor 120 according to an embodiment may omit compiling the plurality of packages included in the third list 550 while compiling at least one package based on the first application 210. For example, based on the first application 210, the processor 120 may compile the plurality of packages included in the first list 450 excluding the plurality of packages included in the third list 550. For example, based on the first application 210, the processor 120 may compile the plurality of packages included in the fourth list 560. However, it is not limited thereto.

As described above, according to an embodiment, the electronic device 101 may reduce identification of the plurality of packages included in the third list 550 by compiling the plurality of packages included in the fourth list 560. The electronic device 101 may reduce a load of the processor 120 by reducing the identification of the plurality of packages included in the third list 550.

FIG. 6 illustrates an example of an operation in which an electronic device according to an embodiment, based on profile information of a package, optimizes the package.

Referring to FIG. 6, according to an embodiment, a processor 120 may compile a first package 610 based on a first application 210. For example, the first package 610 may be configured with sets of instructions in a second type. For example, the first package 610 may include a plurality of methods 611 to 619. For example, a method may be a unit that distinguishes one or more instructions for executing a specific function provided by an application corresponding to a package.

The processor 120 according to an embodiment may compile the plurality of methods 611 to 619 included in the first package 610 from the instructions in the second type to instructions in a first type based on the first application 210. For example, the instructions in the first type may include a native code. For example, the instructions in the first type may include instructions generated by compiling the instructions in the second type.

For example, the instructions in the second type may be configured with a source code and/or a byte code. For example, the byte code may be an instruction having a preset length (e.g., 1 byte).

The processor 120 according to an embodiment may generate a profile 630 based on an interaction of a user. According to an embodiment, the processor 120 may execute the instructions in the second type based on an interpreter (e.g., the interpreter 230 of FIG. 2) (hereinafter, the interpreter 230). The processor 120 may store the profile 630 based on the interaction of the user in memory (e.g., the memory 130 of FIG. 2) (hereinafter, the memory 130). For example, the profile 630 may include a history of executing an application corresponding to the first package 610. For example, the history of executing the first package 610 may include the number at which the application corresponding to the first package 610 was executed in a preset period (e.g., 7 days), the time at which the application corresponding to the first package 610 was executed in the preset period, and/or the history (e.g., frequency) in which each of the plurality of methods 611 to 619 was called.

The processor 120 according to an embodiment may compile the first package 610 based on the profile 630. For example, the processor 120 may compile the first package 610 based on the profile 630 in response to execution of the first application 210. For example, the processor 120 may compile the first package 610 and convert it into a second package 650. For example, the second package 650 may include sets of the instructions in the first type and/or sets of the instructions in the second type. For example, the first package 610 may be configured with the plurality of methods 610-1 to 610-2, which are the uncompiled instructions in the second type.

According to an embodiment, the processor 120 may identify the methods 610-1 that are relatively frequently executed. For example, the processor 120 may identify the number at which the methods were executed during a time interval from a current time point to seven days before the current time point to identify whether the methods are executed relatively frequently. However, it is not limited thereto. The processor 120 may store the profile 630 including the methods 610-1 based on identifying the methods 610-1. The processor 120 according to an embodiment may identify the methods 610-2 that are not executed relatively frequently. The processor 120 may store the profile 630 including the methods 610-2 based on identifying the methods 610-2. The processor 120 may store the profile 630 including the methods 610-1 and the methods 610-2.

For example, a first method 611, a fourth method 614, a fifth method 615, a sixth method 616, and/or an eighth method 618 may be relatively frequently executed methods. For example, a second method 612, a third method 613, a seventh method 617, and/or a ninth method 619 may be methods that are not executed relatively frequently.

For example, the processor 120 may compile the first method 611, the fourth method 614, the fifth method 615, the sixth method 616, and/or the eighth method 618 configured with the instructions in the second type that are relatively frequently executed into a first method 651, a fourth method 654, a fifth method 655, a sixth method 656, and/or an eighth method 658 configured with the instructions in the first type. For example, the processor 120 may include the plurality of compiled methods 650-1 and the plurality of uncompiled methods 650-2. For example, a second method 652, a third method 653, a seventh method 657, and a ninth method 659 exemplified as the plurality of uncompiled methods 650-2 may include the byte code. For example, the processor 120 may store the second package 650 compiled based on the profile 630 as a file of a preset format. For example, the file of the preset format may have a file name extension of '.oat', '.art', and/or '.odex'. The processor 120 according to an embodiment may execute the second package 650 compiled when executing the application.

As described above, according to an embodiment, an electronic device 101 may execute the package faster by executing the compiled second package 650 than execute the first package 610 that is not compiled.

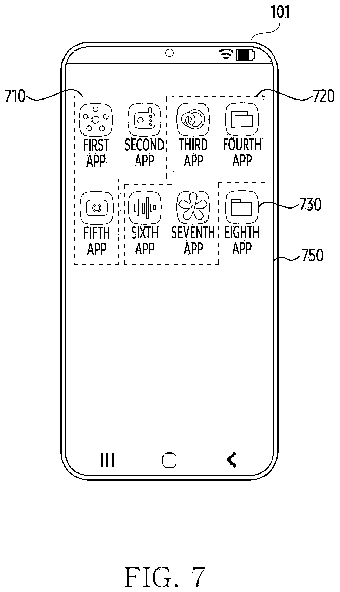

FIG. 7 illustrates, based on an input representing that an electronic device according to an embodiment selects an application, an example of an operation of executing the application.

Referring to FIG. 7, according to an embodiment, an electronic device 101 may display packages on a screen 750 based on a second application (e.g., the second application 350 of FIG. 3) (hereinafter, the second application 350). A processor 120 may compile the packages displayed on the screen 750 by the second application 350 based on an order obtained based on a first application 210. For example, the order may be determined based on whether the package is used in a first period (e.g., 7 days), and/or whether the package is used in a period between the first period and a second period (e.g., 20 days). For example, the processor 120 may assign the packages that are displayed on the screen 750 based on the second application 350 and used in the first period to a first order and compile them. For example, the processor 120 may assign the packages displayed on the screen 750 based on the second application 350 and executed in the period between the first period and the second period to a second order and compile them. The processor 120 may compile the packages assigned to the first order in preference to the packages assigned to the second order.

For example, in FIG. 7, a first APP, a second APP, and a fifth APP may be packages 710 assigned to the first order. A third APP, a fourth APP, a sixth APP, and a seventh APP may be packages 720 assigned to the second order. An eighth APP may be a package 730 in a hibernation state. For example, the processor 120 may compile the packages 720 assigned to the second order after compiling the packages 710 assigned to the first order. The processor 120 may not compile the package 730 in the hibernation state.

According to an embodiment, when executing the packages 710 assigned to the first order, the processor 120 may execute faster than execute the packages 720 assigned to the second order. Since the packages 710 assigned to the first order are stored in memory 130 in a state compiled based on the first application 210, they may be executed faster than the packages 720 assigned to the second order.

The processor 120 according to an embodiment may adjust the order between the packages 710 assigned to the first order. For example, the processor 120 may adjust the order in the packages 710 assigned to the first order based on frequency at which the packages were executed. For example, the executed frequency may be associated with the number at which the packages were executed, and/or time at which the packages were executed. For example, the processor 120 may assign a higher order in the first order as the number at which one package among the packages 710 assigned to the first order was executed is greater. For example, the processor 120 may assign a higher order in the first order as the time at which one package among the packages 710 assigned to the first order was executed is longer.

The processor 120 according to an embodiment may adjust the order between the packages 720 assigned to the second order. For example, the processor 120 may adjust the order in the packages 720 assigned to the second order based on the frequency at which the packages were executed. For example, the processor 120 may assign a higher order in the second order as the number at which one package among the packages 720 assigned to the second order was executed is greater. For example, the processor 120 may assign a higher order in the first order as the time at which one package among the packages 720 assigned to the first order was executed is longer.

According to an embodiment, the processor 120 may execute a first shell command such as 'cmd package bg-dexopt-job'. The processor 120 may execute the first application 210 based on the execution of the first shell command. In case that a temperature of the electronic device 101 is close to a threshold (e.g., 37 °C), the processor 120 may preferentially compile the packages that were executed relatively frequently in a preset period (e.g., 7 days). For example, a case where the temperature of the electronic device 101 is close to the threshold may include a case where the temperature of the electronic device 101 is identified as more or equal to 35 °C. For example, the relatively frequently executed package may include the package executed based on an interaction between the electronic device 101 and a user. For example, the processor 120 may preferentially compile the packages 710 assigned to the first order in the state in which the temperature of the electronic device 101 is close to the threshold.

As described above, the electronic device 101 according to an embodiment may enhance a user experience by preferentially compiling the packages based on the interaction of the user. The electronic device 101 may efficiently use the memory 130 by preferentially compiling the packages based on the interaction of the user.

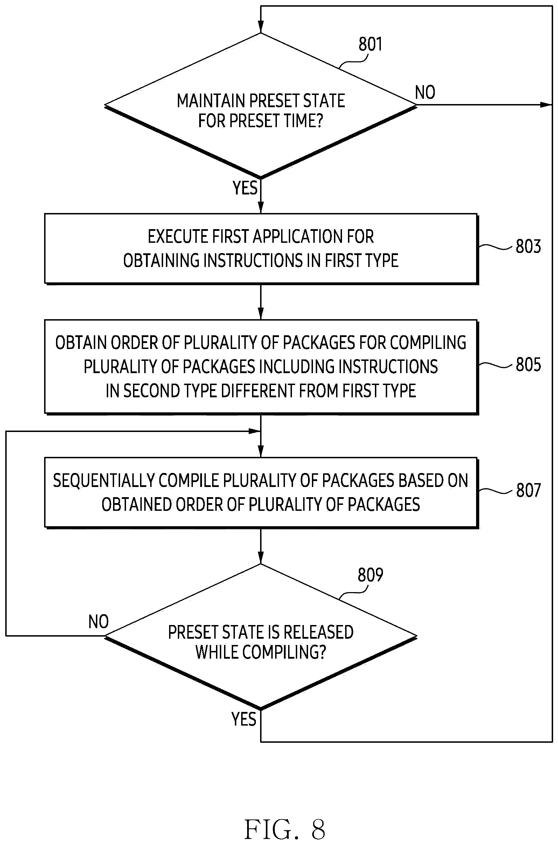

FIG. 8 illustrates an example of a flowchart for describing an operation of an electronic device according to an embodiment. Operations of FIG. 8 may be executed by the electronic device 101 of FIGS. 1 to 7.

Referring to FIG. 8, according to an embodiment, in an operation 801, an electronic device (e.g., the electronic device 101 of FIG. 1) (hereinafter, the electronic device 101) may identify whether the electronic device 101 maintains a preset state for a preset time (e.g., 30 minutes). For example, the preset state may include an idle state. The idle state is described with reference to FIG. 2.

In a case (801-No) that the electronic device 101 does not maintain the preset state for the preset time, the electronic device 101 may repeatedly perform the operation 801.

In a case (801-Yes) that the electronic device 101 maintains the preset state for the preset time, in an operation 803, the electronic device 101 according to an embodiment may execute a first application (e.g., the first application 210 of FIG. 2) (hereinafter, the first application 210) for obtaining instructions in a first type.

In an operation 805, the electronic device 101 according to an embodiment may obtain an order of a plurality of packages 240 for compiling the plurality of packages 240 including instructions in a second type different from the first type. For example, the order may be obtained based on frequency at which each of the plurality of packages 240 was executed and a second application (e.g., the second application 350 of FIG. 3) (hereinafter, the second application 350). For example, the frequency at which each of the plurality of packages 240 was executed may include time at which each of the plurality of packages 240 was executed and/or the number at which each of the plurality of packages 240 was executed. For example, the second application 350 may display an application corresponding to each of the plurality of packages 240 in a screen (e.g., a home screen) of the electronic device 101.

In an operation 807, the electronic device 101 according to an embodiment may sequentially compile the plurality of packages 240 based on the obtained order of the plurality of packages 240. For example, based on the plurality of packages 240 being sequentially connected to groups 451, 453, and 455 included in the first list 450 of FIG. 4, the electronic device 101 may sequentially compile packages included in the groups 451, 453, and 455.

In an operation 809, the electronic device 101 according to an embodiment may identify whether the preset state is released while compiling the plurality of packages 240. In a case (809-Yes) that the preset state is released, while the electronic device 101 compiles the plurality of packages 240, the electronic device 101 may abort compiling the plurality of packages 240 and identify (e.g., the operation 801) whether the preset state is maintained for the preset time. The case in which the electronic device 101 aborts compiling the plurality of packages 240 may include examples to be described later.

According to an embodiment, the processor 120 may identify that a usage of memory 130 of the electronic device 101 is included in a preset range while compiling the plurality of packages 240 based on execution of the first application 210. For example, the processor 120 may identify that the usage of the memory 130 is included in the preset range (e.g., a range where the usage of the memory 130 is more or equal to 95 % and less or equal to 100 %). The processor 120 may abort compiling the plurality of packages 240 in response to identifying that the usage of the memory 130 is included in the preset range.

The processor 120 according to an embodiment may identify that a temperature of the electronic device 101 is included in the preset range based on the execution of the first application 210. For example, the processor 120 may obtain the temperature of the electronic device 101 based on a sensor 280. For example, the sensor 280 may include a temperature sensor. For example, the processor 120 may identify that the temperature obtained based on the sensor 280 is included in the preset range (e.g., more or equal to 37 °C). For example, the processor 120 may abort compiling the plurality of packages 240 in response to identifying that the temperature of the electronic device 101 is included in the preset range.

According to an embodiment, the processor 120 may identify that the remaining capacity of a battery 189 of the electronic device 101 is included in the preset range (e.g., more or equal to 100 %) based on the execution of the first application. For example, the processor 120 may compile the plurality of packages 240 based on a state of charge (SOC) of the battery 189. For example, the processor 120 may identify that the SOC of the battery 189 is included in the preset range. For example, the processor 120 may abort compiling the plurality of packages 240 based on identifying the SOC of the battery 189 as less than the preset range.

The processor 120 according to an embodiment may compile the packages included in the first group 451 in a limit state. For example, the limit state may include a state in which the usage of the memory 130 is identified in the preset range, a state in which the temperature of the electronic device 101 is identified in the preset range, and/or a state in which the SOC of the battery 189 is identified in the preset range. For example, the processor 120 may compile the packages included in the first group 451 based on identifying the limit state. As described above, the electronic device 101 according to an embodiment may enhance a user experience of the electronic device 101 by compiling the packages included in the first group 451 in the limit state and increasing an execution speed of the packages included in the first group 451.

As described above, the electronic device 101 according to an embodiment may abort compiling the plurality of packages 240 based on the usage of the memory 130, the temperature of the electronic device 101, and the SOC of the battery 189, and reduce power consumption. As described above, the electronic device 101 according to an embodiment may abort compiling the plurality of packages 240 based on the usage of the memory 130, the temperature of the electronic device 101, and the SOC of the battery 189, and reduce the usage of the memory 130.

In a case (809-No) that the preset state is not released, while the electronic device 101 compiles the plurality of packages 240, the electronic device 101 may sequentially compile the plurality of packages 240 based on the obtained order of the plurality of packages 240. The operation may be described with reference to the operation 807 and/or FIG. 4. For example, the electronic device 101 may classify at least one package displayed on the screen through the second application 350 and executed in a first time interval into the first group 451. The electronic device 101 may classify at least one package displayed on the screen through the second application 350 and executed in a second time interval into the second group 453. The electronic device 101 may classify a package in a hibernation state into a second list 460. The electronic device 101 may classify at least one package not classified into the first group 451, the second group 453, and the second list 460 into the third group 455. The electronic device 101 may compile at least one package classified into the groups 451, 453, and 455 based on the order assigned to the groups 451, 453, and 455.

As described above, the electronic device 101 according to an embodiment may enhance the user experience by preferentially compiling the package corresponding to an application in which an interaction of the user of the electronic device 101 occurs by compiling based on the order assigned to the groups 451, 453, and 455.

As described above, an electronic device (e.g., the electronic device 101 of FIGS. 1 to 3 and/or the electronic device 101 of FIG. 7) according to an embodiment may include a processor (e.g., the processor 120 of FIGS. 1 to 2) to drive instructions in a first type, and memory (e.g., the memory 130 of FIGS. 1 to 2) in which a plurality of packages (e.g., the plurality of packages 240 of FIGS. 2 to 4) including instructions in a second type different from the first type are stored.

The processor may obtain, by compiling the instructions in the second type stored in a package, an order of the plurality of packages based on execution of the first application (e.g., the first application 210 of FIGS. 2 to 3 and/or the first application 210 of FIG. 6) to obtain the instructions in the first type. The processor may sequentially compile the plurality of packages based on the obtained order. The processor may, in a state of sequential compiling of the plurality of packages based on execution of the first application, compile, in response to identifying that at least one of a usage of the memory, a temperature, or a battery (e.g., the battery 189 of FIGS. 1 to 2) of the electronic device is included in a preset range, one or more packages among the plurality of packages based on frequency at which the plurality of packages were executed.

For example, the frequency at which the plurality of packages were executed may include at least one of time at which the plurality of packages were executed or a number at which the plurality of packages were executed.

For example, the time at which the plurality of packages were executed may include the time at which the plurality of packages 240 were executed in a preset period.

For example, the number at which the plurality of packages were executed may include the number at which the plurality of packages 240 were executed in the preset period.

For example, the order of the plurality of packages may be obtained based on whether it is displayed on a screen (e.g., the screen 750 of FIG. 7) by a second application (e.g., the second application 350 of FIG. 3) different from the first application.

For example, the processor may, based on completion of a compile of at least one of the plurality of packages, store, in the memory, a list of the plurality of packages of which a compile is completed.

For example, the processor may assign, to at least one first package included in the list among the plurality of packages, an order after an order assigned to a second package different from the at least one first package.

For example, the processor may, based on the plurality of packages were not executed during a preset period, generate a second list (e.g., the second list 460 of FIG. 4) different from the list which is a first list (e.g., the first list 450 of FIGS. 4 to 6). The processor may exclude from the order, a package included in the second list.

For example, the processor may, based on identifying that a usage of the memory of the electronic device exceeds a preset threshold associated with the preset range, cease to compile the plurality of packages.

For example, the processor may, based on identifying that the temperature of the electronic device is greater than equal to a preset threshold associated with the preset range, cease to compile the plurality of packages.

For example, the processor may, based on identifying that a state of charge (SOC) of the battery is decreased to be lower than a preset threshold associated with the preset range, cease to compile the plurality of packages.

As described above, a method of an electronic device (e.g., the electronic device 101 of FIGS. 1 to 2 and/or the electronic device 101 of FIG. 7) according to an embodiment may include executing a first application (e.g., the first application 210 of FIGS. 2 to 3 and/or the first application 210 of FIG. 6) to obtain instructions in a first type. The method of the electronic device may include, based on execution of the first application, obtaining an order of a plurality of packages (e.g., the plurality of packages 240 of FIGS. 2 to 4) to compile instructions in a second type which are stored in a package. The method of the electronic device may include sequentially compiling the plurality of packages based on the obtained order. The method of the electronic device may include, in a state of sequential compiling of the plurality of packages based on execution of the first application 210, compiling, in response to identifying that at least one of a usage of memory (e.g., the memory 130 of FIGS. 1 to 2), a temperature, or a battery (e.g., the battery 189 of FIGS. 1 to 2) of the electronic device is included in a preset range, one or more packages among the plurality of packages based on a frequency at which the plurality of packages were executed.

For example, the frequency at which the plurality of packages were executed may include identifying at least one of time at which the plurality of packages were executed or a number at which the plurality of packages were executed.

For example, compiling one or more packages of the plurality of packages based on the frequency at which the plurality of packages were executed may include identifying the time at which the plurality of packages were executed within a preset period.

For example, compiling one or more packages of the plurality of packages 240 based on the frequency at which the plurality of packages were executed may include identifying the number at which the plurality of packages were executed within a preset period.

For example, obtaining the order of the plurality of packages may include obtaining the order based on whether a package is displayed on a screen by a second (e.g., the second application 350 of FIG. 3) application different from the first application.

For example, the method of the electronic device may include, based on completion of at least one of the plurality of packages, storing, in the memory, a list of the plurality of packages of which a compile is completed.

For example, the method of the electronic device may include assigning, to at least one first package included in the list among the plurality of packages, an order after an order assigned to a second package different from the at least one first package.

For example, sequential compiling of the plurality of packages based on the obtained order may, based on the plurality of packages were not executed during a preset period, generate a second list (e.g., the second list 460 of FIG. 4) different from the list which is a first list (e.g., the first list 450 of FIGS. 4 to 6). Sequential compiling of the plurality of packages based on the obtained order may include excluding, from the order, a package included in the second list.

For example, the method of the electronic device may include, based on identifying that a usage of the memory of the electronic device exceeds a preset threshold associated with the preset range, ceasing to compile the plurality of packages.

For example, the method of the electronic device may include, based on identifying that the temperature of the electronic device is greater than or equal to a preset threshold associated with the preset range, ceasing to compile the plurality of packages.

For example, the method of the electronic device may, based on identifying that a state of charge (SOC) of the battery is decreased to be lower than a preset threshold associated with the preset range, cease to compile the plurality of packages.

As described above, according to an embodiment, in a computer readable-storage medium storing one or more programs, the one or more programs may, when executed by a processor (e.g., the processor 120 of FIGS. 1 to 2) of an electronic device (e.g., the electronic device of FIGS. 1 to 3 and/or the electronic device 101 of FIG. 7), based on execution of a first application (e.g., the first application 210 of FIGS. 2 to 3 and/or the first application 210 of FIG. 6) to obtain instructions in a first type, obtain an order of a plurality of packages (e.g., the plurality of packages 240 of FIGS. 2 to 4) to compile instructions in a second type stored in a package. The one or more programs may sequentially compile the plurality of packages 240 based on the obtained order. The one or more programs may cause the processor of the electronic device to, in a state of sequential compiling of the plurality of packages based on execution of the first application, compile, in response to identifying that at least one of a usage of the memory, a temperature, or a battery (e.g., the battery 189 of FIGS. 1 to 2) of the electronic device is included in a preset range, one or more packages among the plurality of packages, based on frequency at which the plurality of packages 240 were executed.

For example, the frequency at which the plurality of packages were executed may include at least one of time at which the plurality of packages were executed or a number at which the plurality of packages were executed.

For example, the time at which the plurality of packages were executed may include the time at which the plurality of packages 240 were executed in a preset period.

For example, the number at which the plurality of packages were executed may include the number at which the plurality of packages were executed in the preset period.

For example, the order of the plurality of packages may be obtained based on whether it is displayed on a screen (e.g., the screen 750 of FIG. 7) by a second application (e.g., the second application 350 of FIG. 3) different from the first application.

For example, the one or more programs may, when executed by the processor 120, based on completion of a compile of at least one of the plurality of packages, store, in the memory, a list of the plurality of packages of which a compile is completed.

For example, the one or more programs may assign, when executed by the processor 120, to at least one first package included in the list among the plurality of packages, an order after an order assigned to a second package different from the at least one first package.

For example, the one or more programs may, when executed by the processor, based on the plurality of packages 240 were not executed during a preset period, generate a second list (e.g., the second list 460 of FIG. 4) different from the list which is a first list (e.g., the first list 450 of FIGS. 4 to 6). The one or more programs may, when executed by the processor, exclude from the order, a package included in the second list.

For example, the one or more programs may, when executed by the processor, based on identifying that a usage of the memory of the electronic device exceeds a preset threshold associated with the preset range, cease to compile the plurality of packages.

For example, the one or more programs may, when executed by the processor, based on identifying that the temperature of the electronic device is greater than or equal to a preset threshold associated with the preset range, cease to compile the plurality of packages 240.

For example, the one or more programs may, when executed by the processor, based on identifying that a state of charge (SOC) of the battery is decreased to be lower than a preset threshold associated with the preset range, cease to compile the plurality of packages.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor to drive instructions in a first type;
memory in which a plurality of packages including instructions in a second type different from the first type are stored,
wherein the processor is configured to,
obtain, by compiling the instructions in the second type stored in a package, an order of the plurality of packages based on execution of a first application to obtain the instructions in the first type;
sequentially compile the plurality of packages based on the obtained order; and
in a state of sequential compiling of the plurality of packages based on execution of the first application, compile, in response to identifying that at least one of a usage of the memory, a temperature, or a battery of the electronic device is included in a preset range, one or more packages among the plurality of packages based on a frequency at which the plurality of packages were executed.

2. The electronic device of claim 1, wherein the frequency at which the plurality of packages were executed includes at least one of time at which the plurality of packages were executed or a number at which the plurality of packages were executed.

3. The electronic device of any one of claim 1 to claim 2, wherein the time at which the plurality of packages were executed includes the time at which the plurality of packages were executed in a preset period.

4. The electronic device of any one of claim 1 to claim 3, wherein the number at which the plurality of packages were executed includes the number at which the plurality of packages were executed in the preset period.

5. The electronic device of any one of claim 1 to claim 4, wherein the order of the plurality of packages is obtained based on whether a package is displayed on a screen by a second application different from the first application.

6. The electronic device of any one of claim 1 to claim 5, wherein the processor is configured to,
based on completion of a compile of at least one of the plurality of packages, store, in the memory, a list of the plurality of packages of which a compile is completed.

7. The electronic device of any one of claim 1 to claim 6, wherein the processor is configured to,
assign, to at least one first package included in the list among the plurality of packages, an order after an order assigned to a second package different from the at least one first package.

8. The electronic device of any one of claim 1 to claim 7, wherein the processor is configured to:
based on the plurality of packages not being executed during a preset period, generate a second list different from the list which is a first list, and
exclude, from the order, a package included in the second list.

9. The electronic device of any one of claim 1 to claim 8, wherein the processor is configured to:
based on identifying that a usage of the memory of the electronic device exceeds a preset threshold associated with the preset range, cease to compile the plurality of packages.

10. The electronic device of any one of claim 1 to claim 9, wherein the processor is configured to:
based on identifying that the temperature of the electronic device is greater than or equal to a preset threshold associated with the preset range, cease to compile the plurality of packages.

11. The electronic device of any one of claim 1 to claim 10, wherein the processor is configured to:
based on identifying that a state of charge (SOC) of the battery is decreased to be lower than a preset threshold associated with the preset range, cease to compile the plurality of packages.

12. A method of an electronic device comprising:
executing a first application to obtain instructions in a first type;
based on execution of the first application, obtaining an order of the plurality of packages to compile instructions in a second type which are stored in a package;
sequentially compiling the plurality of packages based on the obtained order; and
in a state of sequential compiling of the plurality of packages based on execution of the first application, compiling, in response to identifying that at least one of a usage of the memory, a temperature, or a battery of the electronic device is included in a preset range, one or more packages among the plurality of packages based on a frequency at which the plurality of packages were executed.

13. The method of claim 12 comprising, wherein the frequency at which the plurality of packages were executed identifies at least one of time at which the plurality of packages were executed or a number at which the plurality of packages were executed.

14. The method of any one of claim 12 to claim 13, wherein compiling one or more packages of the plurality of packages based on the frequency at which the plurality of packages were executed comprises:
identifying the time at which the plurality of packages were executed within a preset period.

15. The method of any one of claim 12 to claim 14, wherein compiling one or more packages of the plurality of packages based on the frequency at which the plurality of packages were executed comprises:
identifying the number at which the plurality of packages were executed within a preset period.
